# EUROPEAN PATENT APPLICATION

(11) **EP 2 854 068 A1**
(43) Date of publication of application: **01.04.2015**
(21) Application number: 14186993.3
(22) Date of filing: 30.09.2014
(51) Int. Cl.: G06F 21/62

(54) **Dynamic tokenization with multiple token tables**

(30) Priority: 30.09.2013 US 201314042297
(71) Applicant: PROTEGRITY CORPORATION, Grand Cayman (KY)
(72) Inventor: Mattsson, Ulf, Stamford, CT 06905 (US); Ferentz, Zvika, Stamford, CT 06905 (US)
(74) Representative: Round, Edward Mark

(57) **Abstract**

Sensitive data is accessed by a tokenization system. The sensitive data includes a first portion and a second portion. A token table is selected from a plurality of dynamic token tables based on the second portion of the received data. The selected token table is queried with the first portion of the sensitive data. If the selected token table includes a token mapped to the value of the first portion of the sensitive data, the first portion of the sensitive data is replaced with the token to form tokenized data. If the selected token table does not include a token mapped to the value of the first portion of the sensitive data, a token is generated, the sensitive data is tokenized with the generated token, and the generated token and association with the value of the first portion of the sensitive data is stored in the selected token table.

## Description

### FIELD OF ART

This application relates to the field of data protection, and more specifically to the protection of information using dynamic tokenization.

### BACKGROUND

Many websites, services, and applications implement various data protection techniques. Certain techniques involve the use of an encryption key or password that can be subject to interception or brute force guessing. Other methods may protect data but require extensive computing resources to encode and decode data. Such methods often fail to utilize various data format advantages when protecting the data. Often, distinct systems implementing data protection techniques are required to store information associated with the protected data within distinct repositories or databases. Thus, it may be advantageous to implement data protection techniques that utilize distinct information storage locations in such a way as to minimize the processing and storage burden across a data protection system as a whole while improving security and tracking potential data use information and collisions.

### SUMMARY

A tokenization system includes multiple token tables that each map clear text values to associated tokens used to replace portions of sensitive data to form tokenized data. Each of the token tables may be stored in a different server, each server located at physically separate locations.

In one embodiment, a client receives data to be tokenized, including a first data portion and a second data portion. The second portion of the data is used to select a dynamic token table from among a plurality of dynamic token tables. The selected token table is queried with the first data portion to identify a token mapped to the value of the first portion of the data. If the token table includes a token mapped to the value of the first data portion, the token is accessed and used to replace the first data portion form tokenized data. If the token table does not include a token mapped to the value of the first data portion, a new token mapped to the value of the first portion of the data is generated. The generated token is used to replace the first portion of the data to form tokenized data.

An aspect of the invention provides a computer-implemented method for tokenizing data comprising: receiving, by a computing device, sensitive data comprising a first portion and a second portion; selecting a dynamic token table from a plurality of dynamic token tables based on the second portion of the data; determining if the selected token table includes a token mapped to a value of the first portion of the data; responsive to a determination that the selected token table includes a token mapped to the value of the first portion of the data, replacing the first portion of the data with the token to create tokenized data; and responsive to a determination that the selected token table does not include a token mapped to the value of the first portion of the data: generating a token; replacing the first portion of the data with the generated token to create tokenized data; and storing the generated token in the selected token table such that the selected token table maps the generated token to the value of the first portion of the data.

The method may further comprise: prior to replacing the first portion of the data with the generated token, determining whether a collision exists between the generated token and another token stored in the selected token table.

The method may further comprise: responsive to determining that a collision between the generated token and another token stored in the selected token table exists: generating a second token; replacing the first portion of the data with the generated second token to create tokenized data; and storing the generated second token in the selected token table such that the selected token table maps the generated second token to the value of the first portion of the data.

Determining whether a collision exists between the generated token and another token stored in the selected token table may comprise: determining whether the value of a token stored in the selected token table is identical to the value of the generated token.

The received sensitive data may be one of: a credit card number, a bank account number, a social security number, a driver's license number, and a passport number.

Each the plurality of dynamic token tables may be stored in a different server.

The method may further comprise: receiving tokenized data to be de-tokenized, the received tokenized data comprising a token portion and a clear text portion; selecting a token table from the plurality of token tables based on the clear text portion of the received data; selecting a token from the selected token table based on the value of the token portion of the received data; accessing a value mapped to the selected token by the selected token table; and replacing the token portion of the received data with the accessed value to create de-tokenized data.

A further aspect of the invention comprises a non-transitory computer-readable medium storing executable computer instructions, the instructions, when executed by a processor, configured to: receive sensitive data comprising a first portion and a second portion; select a dynamic token table from a plurality of dynamic token tables based on the second portion of the data; determine if the selected token table includes a token mapped to a value of the first portion of the data; responsive to a determination that the selected token table includes a token mapped to the value of the first portion of the data, replace the first portion of the data with the token to create tokenized data; and responsive to a determination that the selected token table does not include a token mapped to the value of the first portion of the data: generate a token; replace the first portion of the data with the generated token to create tokenized data; and store the generated token in the selected token table such that the selected token table maps the generated token to the value of the first portion of the data.

The computer-readable medium may further store executable computer instructions, the instructions configured to: prior to replacing the first portion of the data with the generated token, determine whether a collision exists between the generated token and another token stored in the selected token table.

The computer-readable medium may further store executable computer instructions, the instructions configured to: responsive to determining that a collision between the generated token and another token stored in the selected token table exists: generate a second token; replace the first portion of the data with the generated second token to create tokenized data; and store the generated second token in the selected token table such that the selected token table maps the generated second token to the value of the first portion of the data.

The instructions for determining whether a collision exists between the generated token and another token stored in the selected token table may comprise instructions configured to: determine whether the value of a token stored in the selected token table is identical to the value of the generated token.

The received sensitive data may be one of a credit card number, a bank account number, a social security number, a driver's license number, and a passport number.

Each of the plurality of dynamic token tables may be stored in a different server.

The computer-readable medium may further store executable computer instructions, the instructions configured to: receive tokenized data to be de-tokenized, the received tokenized data comprising a token portion and a clear text portion; select a token table from the plurality of token tables based on the clear portion of the received data; select a token from the selected token table based on the value of the token portion of the received data; access a value mapped to the selected token by the selected token table; and replace the token portion of the received data the accessed value to create de-tokenized data.

A yet further aspect of the invention comprises a system comprising: a processor; and a non-transitory computer readable medium storing computer instructions, the instructions, when executed by the processor, configured to cause the processor to: receive sensitive data comprising a first portion and a second portion; select a dynamic token table from a plurality of dynamic token tables based on the second portion of the data; determine if the selected token table includes a token mapped to a value of the first portion of the data; responsive to a determination that the selected token table includes a token mapped to the value of the first portion of the data, replace the first portion of the data with the token to create tokenized data; and responsive to a determination that the selected token table does not include a token mapped to the value of the first portion of the data: generate a token; replace the first portion of the data with the generated token to create tokenized data; and store the generated token in the selected token table such that the selected token table maps the generated token to the value of the first portion of the data.

The computer readable medium may further store instructions that when executed cause the processor to: prior to replacing the first portion of the data with the generated token, determine whether a collision exists between the generated token and another token stored in the selected token table.

The computer readable medium may further store instructions that when executed cause the processor to: responsive to determining that a collision between the generated token and another token stored in the selected token table exists: generate a second token; replace the first portion of the data with the generated second token to create tokenized data; and store the generated second token in the selected token table such that the selected token table maps the generated second token to the value of the first portion of the data.

Determining whether a collision exists between the generated token and other tokens stored in the selected token table may comprise: determining whether the value of a token stored in the selected token table is identical to the value of the generated token.

The received sensitive data may be one of a credit card number, a bank account number, a social security number, a driver's license number, and a passport number.

A yet further aspect of the invention comprises a computer-implemented method for tokenizing data comprising: receiving, by a computing device, data comprising a first portion and a second portion; selecting a token table from a plurality of token tables based on the second portion of the data; and responsive to a determination that the selected token table does not include a token mapped to a value of the first portion of the data: generating a token; replacing the first portion of the data with the generated token to create tokenized data; and storing the generated token in the selected token table such that the generated token is mapped to the value of the first portion of the data.

### BRIEF DESCRIPTION OF DRAWINGS

The disclosed embodiments have other advantages and features which will be more readily apparent from the detailed description, the appended claims, and the accompanying figures (or drawings). A brief introduction of the figures is below.
Fig. 1 is a system diagram for a tokenization environment, according to one embodiment.
Fig. 2 illustrates data flow within a tokenization system, according to one embodiment.
Fig. 3 is a flow diagram of a process for tokenizing data using multiple dynamic token tables, according to one embodiment.

The figures (Figs.) depict embodiments for purposes of illustration only. One skilled in the art will readily recognize from the following description that alternative embodiments of the structures and methods illustrated herein can be employed without departing from the principles of the invention described herein.

### DETAILED DESCRIPTION

Reference will now be made in detail to several embodiments, examples of which are illustrated in the accompanying figures. It is noted that wherever practicable, similar or like reference numbers can be used in the figures and can indicate similar or like functionality. The figures depict embodiments of the disclosed system (or method) for purposes of illustration only. One skilled in the art will readily recognize from the following description that alternative embodiments of the structures and methods illustrated herein can be employed without departing from the principles described herein.

### TOKENIZATION OVERVIEW

The transmission and storage of sensitive data, such as passwords, credit card numbers, social security numbers, bank account numbers, driving license numbers, transaction information, date information, etc, can be challenging. Before sensitive data can be transmitted or stored, the sensitive data can be tokenized into tokenized data to prevent an unauthorized entity from accessing the data.

As used herein, the tokenization of data refers to the generation of tokenized data by querying one or more token tables mapping input values to tokens with the one or more portions of the data, and replacing the queried portions of the data with the resulting tokens from the token tables. Tokenization can be combined with encryption for increased security, for example by encrypting sensitive data using a mathematically reversible cryptographic function (e.g., datatype-preserving encryption or DTP), a one-way non-reversible cryptographic function (e.g., a hash function with strong, secret salt), or a similar encryption before or after the tokenization of the sensitive data. Any suitable type of encryption can be used in the tokenization of data. A detailed explanation of the tokenization process can be found in US Patent Application No. 13/595,439, filed August 27, 2012, which is hereby incorporated by reference.

As used herein, the term token refers to a string of characters mapped to an input string of characters in a token table, used as a substitute for the string of characters in the creation of tokenized data. A token can have the same number of characters as the string being replaced, or can have a different number of characters. Further, the token can have characters of the same type (such as numeric, symbolic, or alphanumeric characters) as the string of characters being replaced or characters of a different type.

Any type of tokenization can be used to perform the functionalities described herein. One such type of tokenization is static lookup table ("SLT") tokenization. SLT tokenization maps each possible input values (e.g., possible character combinations of a string of characters) to a particular token. An SLT includes a first column comprising permutations of input string values, and can include every possible input string value. The second column of an SLT includes tokens, with each associated with an input string value of the first column. Each token in the second column can be unique among the tokens in the second column. Optionally, the SLT can also include one or several additional columns with additional tokens mapped to the input string values of the first column.

In some embodiments, to increase the security of tokenization, sensitive data can be tokenized two or more times using the same or additional token tables. For example, the first 8 digits of a 16 digit credit card number can be tokenized with an 8 digit token table to form first tokenized data, and the last 12 digits of the first tokenized data can be tokenized using a 12 digit token table to form second tokenized data. In another example, the first 4 digits of a credit card number are tokenized using a first token table, the second 4 digits are tokenized with a second token table, the third 4 digits are tokenized with a third token table, and the last 4 digits are tokenized with a fourth token table. Certain sections of the sensitive data can also be left untokenized; thus a first subset of the resulting tokenized data can contain portions of the sensitive data and a second subset of the tokenized data can contain a tokenized version of the sensitive data.

Dynamic token lookup table ("DLT") tokenization operates similarly to SLT tokenization, but instead of using static tables for multiple tokenizations, a new token value is generated and included in a token table entry each time sensitive data is tokenized and a token for use in tokenizing the sensitive data does not already exist in the token table. The new token value can be generated randomly, can be randomly selected from among a set of values, or can be generated via any other suitable means. A seed value can be used to generate token values, to select a set of values from which to select a token value from among multiple sets of values, or to randomly select a value from among a set of values for use as the token value. It should be noted that as used herein, "randomly" can refer to pseudo-randomly or substantially randomly. The seed value can include a portion of data being tokenized.

In some embodiments, a DLT can map portions of sensitive data being replaced by a token to a token. The DLT can include the entire sensitive data (including portions of the sensitive data that are not replaced by a token), and the DLT can indicate the portion of the sensitive data being replaced by the token and can map the portion to the token. DLTs can in some configurations provide a higher level of security compared to SLT but require the storage and/or transmission of a large amount of data associated with each of the generated token tables. It should be noted that DLT tokenization can be used to tokenize data according to the principles described above with regards to SLT tokenization.

The security of tokenization can be further increased through the use of initialization vectors ("IVs"). An initialization vector is a string of data used to modify sensitive data prior to tokenizing the sensitive data. Example sensitive data modification operations include performing linear or modulus addition on the IV and the sensitive data, performing logical operations on the sensitive data with the IV, encrypting the sensitive data using the IV as an encryption key, and the like. The IV can be a portion of the sensitive data. For example, for a 12-digit number, the last 4 digits can be used as an IV to modify the first 8 digits before tokenization. IVs can also be retrieved from an IV table, received from an external entity configured to provide IVs for use in tokenization, or can be generated based on, for instance, the identity of a user, the date/time of a requested tokenization operation, based on various tokenization parameters, and the like. Data modified by one or more IVs that is subsequently tokenized includes an extra layer of security-an unauthorized party that gains access to the token tables used to tokenized the modified data will be able to detokenize the tokenized data, but will be unable to de-modify the modified data without access to the IVs used to modify the data.

### TOKENIZATION SYSTEM OVERVIEW

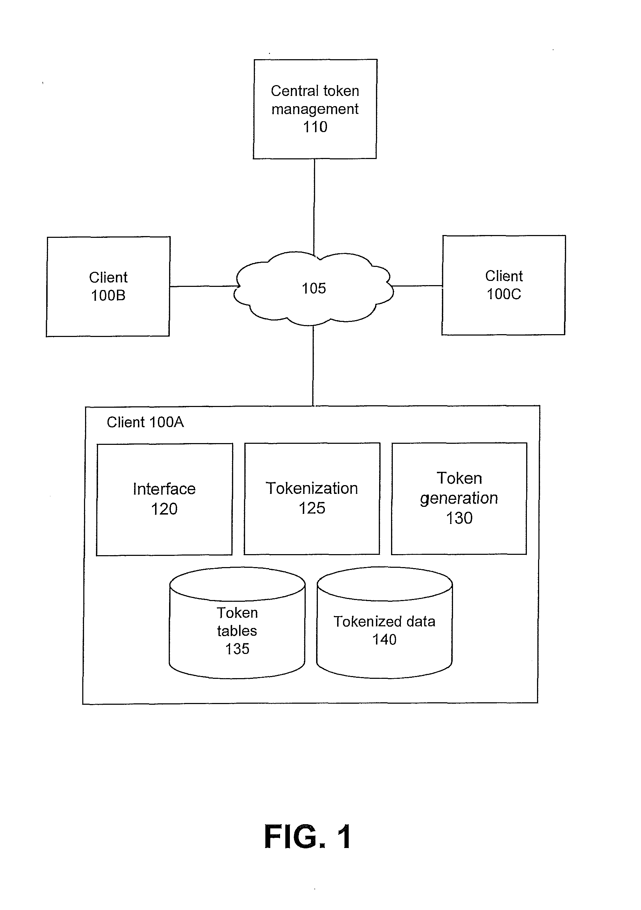

Fig. 1 is a system diagram for a tokenization environment, according to one embodiment. The environment of Fig. 1 includes a plurality of clients 100A, 100B, and 100C ("clients 100" hereinafter), and a central token management system 110, communicatively coupled via a network 105. Each client 100 can be a retailer, business, or other organization, though it should be noted that clients can also be individual users or any other suitable entity. An entity can receive sensitive data, for instance a credit card number or other account number during the course of a transaction with a user, and tokenize all or part of the sensitive data, for instance prior to storage or transmission. It should be noted that while three clients 100 are illustrated in the embodiment of Fig. 1, other embodiments of the system environment can contain any number of clients and/or other components.

A client 100 can include a computing device capable of processing data as well as transmitting data to and receiving data from the other modules of Fig. 1 via the network 105. For example, the client can include a desktop computer, laptop computer, smart phone, tablet computing device, server, payment terminal, or any other device having computing and data communication capabilities. Each computing device includes one or more processors, memory, storage, and networking components. Each client is coupled to the network and can interact with other modules coupled to the network using software such as a web browser or other application with communication functionality. Such software can include an interface for communicating with the other modules via the network.

The network 105 connecting the various modules is typically the Internet, but can be any network, including but not limited to a local area network (LAN), metropolitan area network (MAN), wide area network (WAN), cellular network, wired network, wireless network, private network, virtual private network (VPN), direct communication line, and the like. The network can also be a combination of multiple different networks.

Each client 100 in the embodiment of Fig. 1 includes an interface module 120, a tokenization module 125, a token generation module 130, a token tables storage module 135, and a tokenized data module 140. The interface module 120 is configured to provide an interface between entities external to the client and modules within the client. For instance, the interface module can provide an interface prompting a customer to swipe a credit card, and can transfer the credit card number received in response to the tokenization module 125 for tokenization. The interface module can provide a graphic user interface (GUI) to entities external the client (for instance, via a display or a web page), and/or can provide a communicative interface configured to automatically route received sensitive data. The interface module 120 can also provide an interface for communications between modules of the client, for instance routing generated tokens to the token tables storage module and tokenized data to the tokenized data storage module. The interface module 120 can also receive requests for information associated with token tables stored in the token tables storage module from the central token management system 110, can query the token tables storage module in response, and can provide information received in response to the query to the central token management system.

The tokenization module 125 is configured to receive sensitive data, to tokenize all or part of the received sensitive data, and to store or transmit the tokenized data. In the embodiments described herein, the tokenization module 125 performs DLT tokenization, though it should be noted that other forms of tokenization can also be performed according to the principles described herein. The tokenization module 125 selects a portion of the sensitive data to tokenize, and, in some embodiments, selects a token from a token table stored in the token tables storage module 135. For instance, the tokenization module 125 can select a token table associated with the tokenization operation from a set of token tables stored at the token tables storage module 135, and can query the selected token table with the portion of the sensitive data to identify a token mapped to the value of the portion of the sensitive data. The identified token can then be used to replace the portion of the sensitive data to form tokenized data. The tokenization module 125 can select a token table from a set of token tables based on a second portion of the sensitive data, based on an identity of a requesting entity, based on a time or date of the requested tokenization operation, or based on any other tokenization operation parameter. It should be noted that the token tables storage module 135 can store any number of token tables. As noted above, in some embodiments the token tables are dynamic token tables (or DLTs), and each token stored by a DLT was generated for use in a previous tokenization operation.

In some embodiments, the tokenization module 125 can query a selected token table with a portion of the sensitive data, and can determine that the selected token table does not include a token mapped to the portion of the sensitive data. In such embodiments, the tokenization module 125 requests a token from the token generation module 130. In response, the token generation module 130 can generate a token value randomly, can randomly select a token from a set of pre-generated token values, can request and receive a token from an external entity (such as the central token management system 110), or can generate a token via any other suitable token generation means. As noted above, the token generation module 130 can receive a seed value, such as an initialization vector, for use in generating or selecting a token. The seed value can include a portion of the sensitive data, or can be associated with the context of the tokenization operation (for instance, the identity of a user of the client 100A, the time/date of the tokenization request, and the like). It should be noted that in some embodiments, the token generation module 130 generates or selects a token from among a set of potential token values unique to the client 100A. In such embodiments, each client 100 in the embodiment of Fig. 1 is associated with a different set of potential token values. After the receiving a token from the token generation module 130, the tokenization module 125 can replace the selected portion of the sensitive data with the received token to form tokenized data, and the tokenization module 125 can store the received token and the association between the token and the value of the selected portion of sensitive data in the selected token table within the token tables storage module 135.

For instance, if the middle eight digits of the credit card number "1234 5678 9012 3456" are replaced by the token "99887766", then the tokenization module 125 stores a mapping between the value "56789012" and the token "99887766" in a selected DLT within the token tables storage module 135. Each time a token is generated by the token generation module 130 for use by the tokenization module 125 in a subsequent tokenization operation, a token table entry is created within a DLT associated with the tokenization operation mapping the value of the portion of the sensitive data replaced by the token to the token. It should be noted that each token table stored within the token tables storage module can include an index or identifier associated with a particular tokenization context, such as a portion of sensitive data, a time or date of tokenization request, an identity of a user of a client, and the like. Upon tokenizing the sensitive data, the tokenization module 125 can transmit the tokenized data to an external entity (such as a bank, payment processor, retailer, financial institution, and the like), or can store the tokenized data in the tokenized data storage module 140.

Although not described further herein, tokenized data can be subsequently accessed, for instance from the tokenized data storage module 140. The tokenized data can be detokenized by accessing the token table within the token tables storage module 135 associated with the tokenized data, and the portion of the tokenized data that includes the token can be replaced with the value mapped to the token within the token table.

The central token management system 110 can interface with the clients 100 to perform a variety of pre- and post-tokenization operations. For instance, the central token management system can track tokens stored within token tables at each client within a master token table or token tables. Each time a client generates a new token, the client can provide the new token to the central token management system 110, and the central token management system can update the master token table or token tables to include the new token. The central token management system 110 can be queried by a client to determine if a token associated with a portion of sensitive data already exists within a token table at another client. The central token management system can also track duplicate tokens (different tokens at different token tables mapped to the same sensitive data portion) between the clients, and can store the duplicate tokens for subsequent auditing/analysis. In some embodiments, instead of storing duplicate tokens, a hash representative of each token or a reference to a token table is stored at the central token management system. The central token management system can also synchronize tokens stored within token tables at different clients, and can track where each token is created, the circumstances of the creation of the token, the use of each token, and any other information associated with the tokens, the clients, or tokenization operations.

### DYNAMIC MULTI-TABLE TOKENIZATION

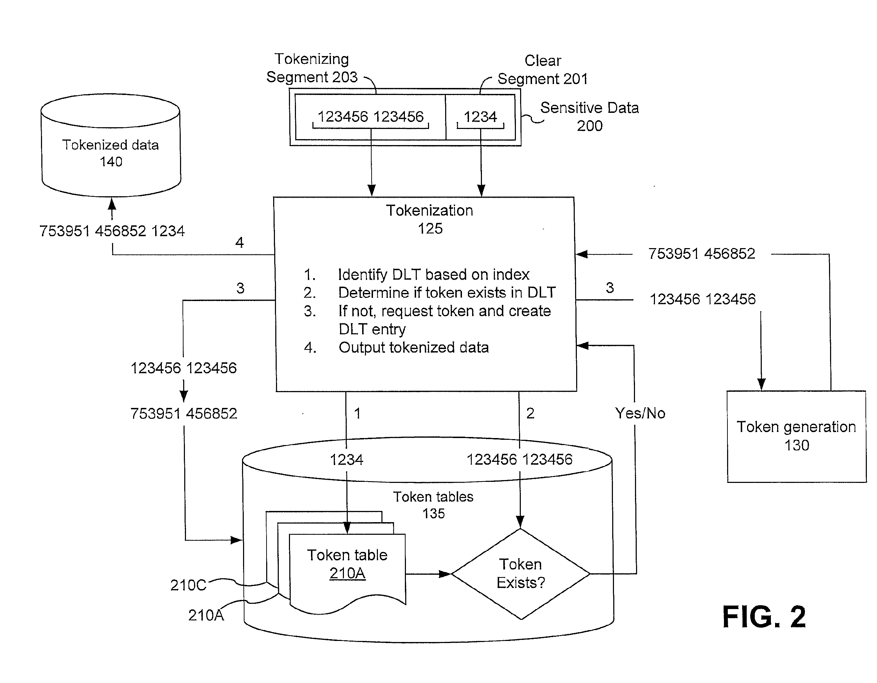

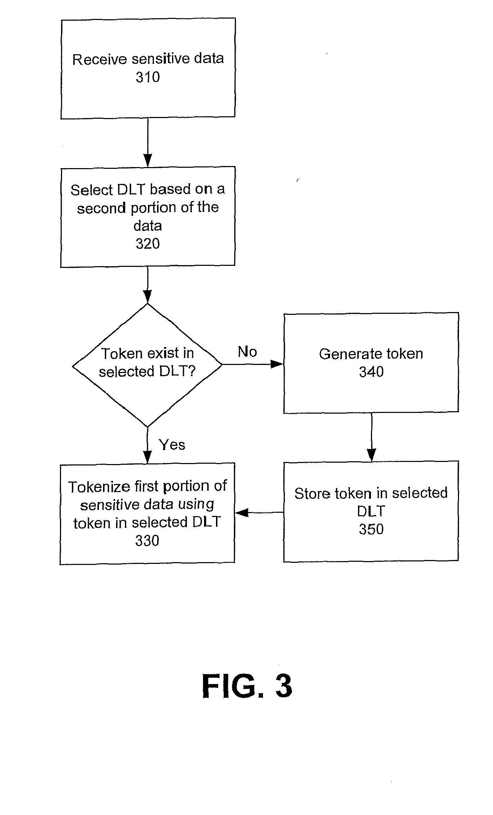

Fig. 2 illustrates an example of data flow within the tokenization system of Fig. 1, according to one embodiment. Fig. 3 is a flow diagram of a process for tokenizing data using multiple dynamic token tables, according to one embodiment. Figs. 2 and 3 are described together herein for the purposes of simplicity.

Then tokenization module 125 receives 310 sensitive data 200. In the example of embodiment of FIG. 2, the sensitive data 200 includes the string "123456 123456 1234." The sensitive data 200 is parsed into multiple portions. For instance, the sensitive data 200 is parsed into two portions, a first portion (the "tokenizing portion") 203, which includes the value "123456 123456," and a second portion (the "clear portion") 201, which includes the value "1234." Depending on the tokenization scheme used by tokenization module 125, sensitive data may be split into any number of portions (e.g., into three portions) of any length or composition. For instance, the token "123456 123456 1234" may be split into portions "123456" and "123456 1234" or into portions "1234," "56123456," and "1234."

One of the portions of the sensitive data 200 is used to select 320 a token table 210. In the example of Fig. 2, the clear portion 201 is used by the tokenization module 125 to select 320 a token table 210A from a set of token tables 210 (made up of token tables 210A, 210B, and 210C). The tokenization module 125 can select a token table from the set of token tables 210 using the clear portion 201 by any suitable means. The tokenization module 125 can match the clear segment to a table identifier. For example, the tokenization module 125 can select the token table 210A from the set of token tables 210 if the token table 210A is associated with the identifier "1234", is indexed with the value "1234." In another example, the tokenization module 125 can select the token table 210A from the set of token tables 210 if the token table 210A is associated with a truncated version of the value of the clear portion 201 (such as the value "12"). It should be noted that in some embodiments, the tokenization module 125 can encrypt or otherwise modify the clear portion 201 (for instance, by performing modulo addition on the clear portion 201 and an IV or other value) to form a modified clear portion, and can then select a token table based on the modified clear portion, using the value of the modified clear portion (or subpart thereof) to select a matching table identifier. In some embodiments, the token table storage module 135 includes one token table for each possible value of the clear portion 201. In other embodiments, a single token table is associated with multiple values of the clear portion 201 (e.g., each token table can be used for 10 possible values of the clear portion 201, using a hashing function).

To increase security, each token table or set of token tables can be stored in a physically separated server, for instance, a server located in a different room, building, data center, state, and the like. Alternatively, each server may store a threshold number of token tables (e.g., 10 token tables). If the tokens in each token table are generated using a different token generation key (such as a random seed value), the exposure of a token generation key resulting from a security compromise or access by an unauthorized party of one token table does not compromise the security of other token tables. In other words, the compromise of one token table or server storing token tables does not necessarily result in the compromise of another token table or server storing token tables.

Locating servers storing token tables in physically separated locations increases the difficulty of for an unauthorized entity to physically access and compromise token tables stored at more than one server. If an unauthorized entity obtains access to a server storing one or more token tables, the intrusion of the first server can be detected before the unauthorized entity has a chance to obtain access to a second server. As noted above, the servers storing token tables can be located within the same data center, in different buildings, in different data centers, in different cities or countries, and the like.

Returning to the data flow of Fig. 2, the tokenizing portion 203 is used to query the selected token table. In Fig. 2, the tokenizing portion "123456 123456" is used to query the token table 210A. If the selected token table includes a token mapped to the value of the tokenizing portion, the token is accessed and the sensitive data is tokenized 330 using the accessed token to form tokenized data 140 (for instance by replacing the tokenizing portion 203 with the selected token). In Fig. 2, if the token table 210A includes a token (such as the token "753951 456852") mapped to the value of the tokenizing portion (the value "123456 123456"), the portion of the sensitive data 200 made up of the tokenizing portion 203 is replaced with the token, resulting the tokenized data "753951 456852 1234".

If the selected token table does not include a token mapped to the value of the tokenizing portion, the tokenization module 125 requests a new token from the token generation module 130. The token generation module 130, in response to receiving a request from the tokenization module 125, generates 340 a token and provides the generated token to the tokenization module 125. In FIG. 2, the token generation module 130 generates the token "753951 456852", for instance by generated a random token value, by randomly selecting from a set of pre-generated random values, or by receiving the token from an external entity, such as a token server. In some embodiments, the tokenization module 125 can determine if the token received from the token generation module 130 is unique within the selected token table. If the received token is not unique (the selected token table already includes an equivalent token), the tokenization module 125 can request a different token from the token generation module 130.

Upon receiving the generated token from the token generation module 130, the tokenization module 125 stores 350 the generated token in the selected token table. In one embodiment, to store the generated token in the selected token table, the tokenization module 125 stores the value of the tokenizing portion 203 (for instance, in a first column of the selected token table), stores the value of the received token (for instance, in a second column of the selected token table), and stores the associated between the value of the tokenizing portion and the value of the received token (for instance, by storing both in the same row of the selected token table). In the embodiment of Fig. 2, the token generation module 130 can generate the token "753951 456852", and can store the association between the value of the tokenizing portion ("123456 123456") and the generated token in the selected token table 210A. After storing the received token in the selected token table, the tokenization module 125 can tokenize the sensitive data 200 using the received token to form tokenized data, for instance by replacing the tokenizing portion 203 with the value of the received token. The tokenized data can then be stored in the tokenized data storage module 140 and/or sent to an entity requesting the tokenized data.

### ADDITIONAL CONFIGURATION CONSIDERATIONS

The present invention has been described in particular detail with respect to one possible embodiment. Those of skill in the art will appreciate that the invention may be practiced in other embodiments. First, the particular naming of the components and variables, capitalization of terms, the attributes, data structures, or any other programming or structural aspect is not mandatory or significant, and the mechanisms that implement the invention or its features may have different names, formats, or protocols. Also, the particular division of functionality between the various system components described herein is merely exemplary, and not mandatory; functions performed by a single system component may instead be performed by multiple components, and functions performed by multiple components may instead performed by a single component.

Some portions of above description present the features of the present invention in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times, to refer to these arrangements of operations as modules or by functional names, without loss of generality.

Unless specifically stated otherwise as apparent from the above discussion, it is appreciated that throughout the description, discussions utilizing terms such as "determine" refer to the action and processes of a computer system, or similar electronic computing device, that manipulates and transforms data represented as physical (electronic) quantities within the computer system memories or registers or other such information storage, transmission or display devices.

Certain aspects of the present invention include process steps and instructions described herein in the form of an algorithm. It should be noted that the process steps and instructions of the present invention could be embodied in software, firmware or hardware, and when embodied in software, could be downloaded to reside on and be operated from different platforms used by real time network operating systems.

The present invention also relates to an apparatus for performing the operations herein. This apparatus may be specially constructed for the required purposes, or it may comprise a general-purpose computer selectively activated or reconfigured by a computer program stored on a non-transitory computer readable medium that can be accessed by the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of computer-readable storage medium suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations. In addition, the present invention is not described with reference to any particular programming language. It is appreciated that a variety of programming languages may be used to implement the teachings of the present invention as described herein, and any references to specific languages are provided for invention of enablement and best mode of the present invention.

The present invention is well suited to a wide variety of computer network systems over numerous topologies. Within this field, the configuration and management of large networks comprise storage devices and computers that are communicatively coupled to dissimilar computers and storage devices over a network, such as the Internet.

Finally, it should be noted that the language used in the specification has been principally selected for readability and instructional purposes, and may not have been selected to delineate or circumscribe the inventive subject matter. Accordingly, the disclosure of the present invention is intended to be illustrative, but not limiting, of the scope of the invention, which is set forth in the following claims.

## Claims

1. A computer-implemented method for tokenizing data comprising:
receiving, by a computing device, sensitive data comprising a first portion and a second portion;
selecting a dynamic token table from a plurality of dynamic token tables based on the second portion of the data;
determining if the selected token table includes a token mapped to a value of the first portion of the data;
responsive to a determination that the selected token table includes a token mapped to the value of the first portion of the data, replacing the first portion of the data with the token to create tokenized data; and
responsive to a determination that the selected token table does not include a token mapped to the value of the first portion of the data:
generating a token;
replacing the first portion of the data with the generated token to create tokenized data; and
storing the generated token in the selected token table such that the selected token table maps the generated token to the value of the first portion of the data.

2. The method of claim 1 further comprising:
prior to replacing the first portion of the data with the generated token, determining whether a collision exists between the generated token and another token stored in the selected token table.

3. The method of claim 2 further comprising:
responsive to determining that a collision between the generated token and another token stored in the selected token table exists:
generating a second token;
replacing the first portion of the data with the generated second token to create tokenized data; and
storing the generated second token in the selected token table such that the selected token table maps the generated second token to the value of the first portion of the data.

4. The method of any preceding claim, wherein the received sensitive data is one of: a credit card number, a bank account number, a social security number, a driver's license number, and a passport number.

5. The method of any preceding claim, wherein each the plurality of dynamic token tables is stored in a different server.

6. The method of any preceding claim, further comprising:
receiving tokenized data to be de-tokenized, the received tokenized data comprising a token portion and a clear text portion;
selecting a token table from the plurality of token tables based on the clear text portion of the received data;
selecting a token from the selected token table based on the value of the token portion of the received data;
accessing a value mapped to the selected token by the selected token table; and
replacing the token portion of the received data with the accessed value to create detokenized data.

7. A non-transitory computer-readable medium storing executable computer instructions, the instructions, when executed by a processor, configured to:
receive sensitive data comprising a first portion and a second portion;
select a dynamic token table from a plurality of dynamic token tables based on the second portion of the data;
determine if the selected token table includes a token mapped to a value of the first portion of the data;
responsive to a determination that the selected token table includes a token mapped to the value of the first portion of the data, replace the first portion of the data with the token to create tokenized data; and
responsive to a determination that the selected token table does not include a token mapped to the value of the first portion of the data:
generate a token;
replace the first portion of the data with the generated token to create tokenized data; and
store the generated token in the selected token table such that the selected token table maps the generated token to the value of the first portion of the data.

8. The computer-readable medium of claim 7 further storing executable computer instructions, the instructions configured to:
prior to replacing the first portion of the data with the generated token, determine whether a collision exists between the generated token and another token stored in the selected token table.

9. The computer-readable medium of claim 8 further storing executable computer instructions, the instructions configured to:
responsive to determining that a collision between the generated token and another token stored in the selected token table exists:
generate a second token;
replace the first portion of the data with the generated second token to create tokenized data; and
store the generated second token in the selected token table such that the selected token table maps the generated second token to the value of the first portion of the data.

10. The computer-readable medium of any one of claims 7 to 9, wherein each the plurality of dynamic token tables is stored in a different server.

11. The computer-readable medium of any one of claims 7 to 10, further storing executable computer instructions, the instructions configured to:
receive tokenized data to be de-tokenized, the received tokenized data comprising a token portion and a clear text portion;
select a token table from the plurality of token tables based on the clear portion of the received data;
select a token from the selected token table based on the value of the token portion of the received data;
access a value mapped to the selected token by the selected token table; and
replace the token portion of the received data the accessed value to create de-tokenized data.

12. A system comprising:
a processor; and
a non-transitory computer readable medium storing computer instructions, the instructions, when executed by the processor, configured to cause the processor to:
receive sensitive data comprising a first portion and a second portion;
select a dynamic token table from a plurality of dynamic token tables based on the second portion of the data;
determine if the selected token table includes a token mapped to a value of the first portion of the data;
responsive to a determination that the selected token table includes a token mapped to the value of the first portion of the data, replace the first portion of the data with the token to create tokenized data; and
responsive to a determination that the selected token table does not include a token mapped to the value of the first portion of the data:
generate a token;
replace the first portion of the data with the generated token to create tokenized data; and
store the generated token in the selected token table such that the selected token table maps the generated token to the value of the first portion of the data.

13. The system of claim 12, wherein the computer readable medium further stores instructions that when executed cause the processor to:
prior to replacing the first portion of the data with the generated token, determine whether a collision exists between the generated token and another token stored in the selected token table.

14. The system of claim 13 wherein the computer readable medium further stores instructions that when executed cause the processor to:
responsive to determining that a collision between the generated token and another token stored in the selected token table exists:
generate a second token;
replace the first portion of the data with the generated second token to create tokenized data; and
store the generated second token in the selected token table such that the selected token table maps the generated second token to the value of the first portion of the data.

15. A computer-implemented method for tokenizing data comprising:
receiving, by a computing device, data comprising a first portion and a second portion;
selecting a token table from a plurality of token tables based on the second portion of the data; and
responsive to a determination that the selected token table does not include a token mapped to a value of the first portion of the data:
generating a token;
replacing the first portion of the data with the generated token to create tokenized data; and
storing the generated token in the selected token table such that the generated token is mapped to the value of the first portion of the data.
